# EUROPÄISCHE PATENTSCHRIFT

(11) **EP 3 478 398 B1**
(45) Veröffentlichungstag und Bekanntmachung des Hinweises auf die Patenterteilung: **12.08.2020**
(21) Anmeldenummer: 17737727.2
(22) Anmeldetag: 22.06.2017
(51) Int. Cl.: B01D 63/02

(54) **VERFAHREN ZUR HERSTELLUNG EINES MEMBRANFILTERS**
METHOD FOR PRODUCING A MEMBRANE FILTER
PROCÉDÉ DE FABRICATION D'UN FILTRE À MEMBRANES

(30) Priorität: 30.06.2016 DE 102016211903
(43) Veröffentlichungstag der Anmeldung: 08.05.2019
(73) Patentinhaber: Membion GmbH, 52159 Roetgen (DE)
(72) Erfinder: VOLMERING, Dirk, 52070 Aachen (DE); VOSSENKAUL, Klaus, 52074 Aachen (DE)
(74) Vertreter: Bauer, Dirk
(86) Internationale Anmeldenummer: PCT/EP2017/065341
(87) Internationale Veröffentlichungsnummer: WO 2018/001845

(56) Entgegenhaltungen:
- WO-A1-2015/152401
- DE-U1- 29 624 474
- US-A- 5 598 874
- US-A1- 2011 031 180
- US-A1- 2014 102 971

## Beschreibung

Die Erfindung betrifft ein Verfahren zur Herstellung eines Membranfilters zum Filtern einer Flüssigkeit, wobei der Membranfilter mindestens einen Header aufweist und mindestens einen Membranblock, der mit dem Header verbunden ist, wobei der mindestens eine Membranblock mehrere Reihen weitgehend parallel nebeneinander angeordneter Hohlfasermembranen aufweist, wobei jede der Hohlfasermembranen ein offenes Ende aufweist, das an einen Permeat-Raum in dem mindestens einen Header anschließt, und aus dem Permeat-Raum im Betrieb ein Filtrat abgezogen werden kann, wobei der mindestens eine Membranblock in einer Distanz von den offenen Enden einen Abstandhalter aufweist, der die Hohlfasermembranen beabstandet und miteinander verbindet, und wobei die Hohlfasermembranen zwischen dem Abstandhalter und den offenen Enden von einer Dichtungsschicht umgeben sind, die die Hohlfasermembranen in dem Header fixiert und den Permeat-Raum gegenüber der Flüssigkeit abdichtet, und wobei das Verfahren folgende Schritte aufweist: Bilden des mindestens einen Membranblocks, Einbringen des mindestens einen Membranblocks in den Header, Einbringen eines flüssigen Gießmaterials zwischen den Abstandhalter und die offenen Enden derart, dass das Gießmaterial die Hohlfasermembranen umschließt, und Aushärten des Gießmaterials zu der Dichtungsschicht.

Ein Verfahren zur Herstellung eines Membranfilters mit den eingangs beschriebenen Merkmalen ist aus US 2001/0037967 A1 bekannt.

Gemäß dem bekannten Verfahren wird der Membranblock durch Aufschichten einzelner Lagen von Hohlfasermembranen gebildet. Die Herstellung einer Lage erfolgt, indem zunächst eine Reihe von Hohlfasermembranen gleicher Länge parallel nebeneinander auf eine Oberfläche gelegt wird, die mit einem Streifen eines Materials beschichtet ist, an dem der Kleber nicht haftet. Die Membranen werden mit ihren offenen Enden in einer Distanz von dem Streifen positioniert. Im Bereich dieses Streifens wird dann eine 2 bis 3 cm breite Schicht des Klebers von oben auf die Reihe von Hohlfasermembranen aufgetragen. Dadurch werden die Hohlfasermembranen der Reihe miteinander verbunden. Nach Aushärten des Klebers entsteht so eine Lage von Hohlfasermembranen, die von der Oberfläche abgenommen werden kann, da aufgrund des beschichteten Streifens keine Haftung des Klebers auf der Oberfläche besteht.

In dem Bereich, in dem der Kleber aufgetragen wird, ist eine Vertiefung in die Oberfläche eingelassen, so dass der auf die Membranen aufgetragene Kleber von oben durch die Abstände zwischen den Hohlfasermembranen in die Vertiefung gelangt und so die Hohlfasermembranen ringsum einbettet. Dadurch wird der Zusammenhalt der Hohlfasermembranen in der Lage verbessert.

Die Bildung des Membranblocks erfolgt durch Aufschichtung mehrerer Lagen von Hohlfasermembranen derart, dass die ausgehärteten Abstandhalter der Lagen beim Aufschichten übereinander positioniert und zusammen geklemmt oder durch zusätzlichen Kleber miteinander verklebt werden. In beiden Fällen entsteht dadurch ein Membranblock mit mehreren Reihen von Hohlfasermembranen, die in der Distanz von den offenen Enden von einem aus Kleber aufgebauten Abstandhalter umgeben sind.

Vor der Einbringung des Membranblocks in den Header wird eine Gelschicht in den Header eingegossen. In diese werden die offenen Enden der Hohlfasermembranen beim Einbringen des Membranblocks eingetaucht. Dabei verschließt das Gel die offenen Enden, ohne sich außen an den Hohlfasermembranen hochzuziehen. Auf die Gelschicht wird im Anschluss ein Gießmaterial aufgebracht, derart, dass dieses bis an den Abstandhalter reicht. Nach dem Aushärten des Gießmaterials zu der Dichtschicht sind die Hohlfasermembranen mit dem Header über die Dichtschicht verbunden und im Header fixiert. Über Herauslösen des Gels entsteht dann im Membranfilter ein Permeat-Raum, der an die offenen Enden der Hohlfasermembranen anschließt und über den im Betrieb des Filters ein flüssiges Permeat abgezogen wird.

Hohlfasermembranen haben einen Durchmesser von weniger als 5 mm, meist 0,5 bis 3 mm und weisen eine Durchlässigkeit von Mikrofiltrationsmembranen oder Ultrafiltrationsmembranen auf. Die Verwendung von Hohlfasermembranen für die Umkehrosmose oder Nanofiltration ist auch möglich.

Ein weiteres Verfahren mit den eingangs genannten Merkmalen ist aus US 2014/0102971 A1 bekannt.

Im Hintergrund der Erfindung schlägt WO-00/44483 vor, die endlos aus einer Anlage zur Membranproduktion kommende Hohlfasermembran einlagig auf eine Trommel aufzuwickeln. Nachdem die Trommel mit der aufgewickelten Membran voll belegt ist, wird quer zu der Membranwicklung ein Klebestreifen aufgetragen. Nach Aushärten des Klebestreifens werden die auf die Trommel aufgewickelten Hohlfasermembranen parallel zur Axialrichtung der Trommel neben dem Klebestreifen oder genau in dessen Mitte geschnitten, so dass die Hohlfasermembranen als fertige Lagen von der Trommel abgenommen werden können. Die Hohlfasermembranen einer einzelnen Reihe sind somit in der fertigen Lage über einen oder mehrere Abstandhalter aus Kleber miteinander verbunden.

Im Hintergrund der Erfindung wird zudem in DE-102004004212B4 ein Verfahren beschrieben, bei dem das Gießmaterial auf einen Abstandhalter in Richtung der offenen Enden der Hohlfasermembranen gegossen wird. In diesem Fall wird der Abstandhalter als eigenes separates Bauteil produziert und anschließend mit Hohlfasermembranen bestückt. Bei der Bestückung mit Hohlfasermembranen wird der Abstandhalter von den Hohlfasermembranen durchstoßen. So wird beispielsweise ein perforierter Abstandhalter in Form einer Lochplatte beschrieben, in deren Löcher auf Länge geschnittene Hohlfasermembranen einzeln eingefädelt werden. Das Einfädeln der Hohlfasermembranen in den Abstandhalter erweist sich jedoch als komplizierter Vorgang, der nur mit hohem Aufwand automatisiert werden kann. Nach dem Einfädeln stehen die offenen Enden der Hohlfasermembranen um eine Distanz aus dem Abstandhalter heraus, und der fertig bestückte Abstandhalter wird als Membranblock passgenau und gegen das Gießmaterial abdichtend in einen Header eingebracht. So entsteht ein Gießraum für das Gießmaterial, der von dem Header und dem Abstandhalter begrenzt wird, in den das Gießmaterial auf den Abstandhalter gegossen wird.

Das Einbringen des Gießmaterials im endnahen Bereich der Hohlfasermembranen in Richtung der offenen Enden wird im Hintergrund der Erfindung auch bereits in US 3730959 beschrieben.

Im Hintergrund der Erfindung schlagen weiterhin DE 10 2014 219 960 A1 und DE 10 2013 017 375 A1 vor, einen Membranblock für einen Luftbefeuchter durch Falten einer ein- bzw. beidseitig mit Membranen belegten Trägerfolie herzustellen.

Weiterhin schlägt im Hintergrund der Erfindung DE 102 27 721 A1 ein Potting-Verfahren ohne Dichtungsschicht vor.

Bei dem bekannten Verfahren erweist sich das Handling der einzelnen Lagen von Hohlfasermembranen beim Aufschichten zum Membranblock als aufwendig, vor allem vor dem Hintergrund, dass die Membranen häufig eine Länge von mehr als 2 Metern aufweisen und zudem an beiden Seiten in einen Header eingegossen werden. Hinzu kommt, dass das Aufschichten der einzelnen Lagen übereinander eine präzise Positionierung der Lagen und deren Abstandhalter erfordert, was im Rahmen einer Automatisierung des Produktionsprozesses in der Regel nur über die Verwendung von aufwendigen und kostenintensiven Robotern ermöglicht werden kann.

### Aufgabe

Der Erfindung liegt die Aufgabe zugrunde, die Herstellung eines Membranfilters kostengünstig zu automatisieren.

### Lösung

Ausgehend von dem bekannten Verfahren wird nach der Erfindung vorgeschlagen, dass der mindestens eine Membranblock gebildet wird durch Auftragen einer ersten Schicht eines Klebers auf eine Oberfläche, anschließende Wiederholung der folgenden Schritte bis alle Hohlfasermembranen des mindestens einen Membranblocks eingelegt sind: (i) Einlegen der Hohlfasermembranen einer der Reihen in die zuvor aufgetragene Schicht des Klebers, wobei die offenen Enden in der Distanz zu der zuvor aufgetragenen Schicht des Klebers positioniert werden, (ii) Auftragen einer weiteren Schicht des Klebers auf die zuvor aufgetragene Schicht, so dass die eingelegten Hohlfasermembranen ringsum von dem Kleber umgeben sind, und Aushärten des Klebers zu dem Abstandhalter.

Durch das erfindungsgemäße Verfahren wird komplett auf den Zwischenschritt der Fertigung von einzelnen Lagen von Hohlfasermembranen verzichtet, da der Membranblock durch das Aufschichten aller Reihen mit dazwischenliegenden Kleberschichten direkt als Ganzes gebildet wird. Somit entfällt das komplette Handling der einzelnen Lagen von Hohlfasermembranen, wodurch der Produktionsprozess und dessen Automatisierung deutlich vereinfacht werden.

Bei Membranfiltern, die nach dem erfindungsgemäßen Verfahren hergestellt werden, sind typischer Weise an den flüssigkeitsseitigen Austrittsstellen der Hohlfasermembranen aus dem Abstandhalter die einzelnen Schichten des Klebers erkennbar, die erst als Gesamtpaket zum Abstandhalter ausgehärtet sind.

Der zum Abstandhalter ausgehärtete Kleber kann zudem die Funktion übernehmen, die Hohlfasermembranen in dem Übergangsbereich des Austritts aus der Fixierung im Header in den Eintritt der Flüssigkeit weich einzubetten. Dadurch wird die Belastung der Hohlfasermembranen an den Einspannstellen im Header reduziert, was sich positiv auf die Lebensdauer der Membranen auswirkt.

Dies ist insbesondere vorteilhaft vor dem Hintergrund eines Einsatzes der Membranfilter beim getauchten Betrieb in Membranbioreaktoren zur Abwasseraufbereitung. Hierbei werden die Membranen zur Spülung der Filter intensiv belüftet. Die eingetragenen Luftblasen bewegen die Hohlfasermembranen und führen insbesondere in deren Einspannstellen, d.h. in dem Übergangsbereich von der Flüssigkeit zum Header, in dem die Hohlfasermembranen fixiert sind, zu erhöhten mechanischen Belastungen. Es ist daher vorteilhaft, dass der Kleber nach der Aushärtung zum Abstandhalter ein weiches Material ist.

Vorteilhaft einsetzbare Kleber nach dem erfindungsgemäßen Verfahren sind daher beispielsweise Silikone mit langer Verarbeitungszeit, die auch nach erfolgter Aushärtung durch Vernetzung immer noch sehr weich sind.

Für das zur Dichtungsschicht aushärtende Gießmaterial eigenen sich bevorzugt Epoxidharze.

Nach dem erfindungsgemäßen Verfahren ist vorzugsweise der Abstandhalter nur aus Kleber aufgebaut. Bei niedrigviskosen Klebern reicht das Einlegen der Hohlfasermembranen in den Kleber und das anschließende Auftragen einer weiteren Schicht des Klebers in der Regel aus, um eine vollständige Benetzung des Umfangs der Hohlfasermembranen sicherzustellen.

Es ist andererseits vorteilhaft, dass der Kleber beim Einlegen der Hohlfasermembranen auch als Schicht formstabil bleibt. Um das zu erreichen, können auch Zusatzstoffe zur Stabilisierung der Schichten des Klebers, wie zum Beispiel Bänder, Streifen oder anderen Materialien mit in den Kleber eingebracht werden.

Alternativ kann die Formstabilität der Schichten beim erfindungsgemäßen Verfahren auch durch die Verwendung von hochviskosen bis pastösen Klebern erreicht werden. In diesem Fall ist es vorteilhaft, dass die Hohlfasermembranen nach dem Einlegen in den Kleber niedergedrückt werden, so dass sie in diesen zumindest teilweise eintauchen. Durch das Niederdrücken kann auch bei hochviskosen und pastösen Klebern sichergestellt werden, dass die Hohlfasermembranen ringsum von dem Kleber benetzt werden.

Beim erfindungsgemäßen Verfahren ist es zudem vorteilhaft, wenn das Auftragen einer weiteren Schicht des Klebers erfolgt, während der Kleber der zuvor aufgetragenen Schicht noch klebrig ist, und der Kleber erst zu dem Abstandhalter aushärtet, nachdem alle Hohlfasermembranen eingelegt sind. Dadurch entsteht eine gute Verbindung und Haftung der einzelnen Schichten des Klebers untereinander, da diese sich an ihren Grenzflächen miteinander besser miteinander verbinden.

Vorteil dieses erfindungsgemäßen Verfahrens ist es zudem, dass die Hohlfasermembranen einer Reihe in die Zwischenräume der Hohlfasermembranen der zuvor eingelegten Reihe eingelegt und niedergedrückt werden können. Um eine gleichmäßige und hohe Packungsdichte der Hohlfasermembranen in dem Membranblock zu erreichen, ist es dabei auch möglich, dass die Hohlfasermembranen in den Zwischenräumen mit ihrer Unterseite tiefer in den Kleber eintauchen als die Oberseite der Hohlfasermembranen der zuvor eingelegten Reihe. Das ist nur dadurch möglich, dass die Schichten des Klebers der zuvor eingelegten Reihe beim Einlegen der Hohlfasermembranen der nächsten Reihe noch weich und klebrig sind.

Bei einer bevorzugten Ausgestaltung eines Membranfilters, der nach dem erfindungsgemäßen Verfahren hergestellt wird, sind daher die Membranen der einzelnen Reihen derart angeordnet, dass sie jeweils in die Zwischenräume der Hohlfasermembranen der benachbarten Reihen eintauchen.

Das Eintauchen kann dabei auch so weit erfolgen, dass der Abstand der Reihen, gemessen durch den Abstand der Ebenen, die durch die Achsen der Hohlfasermembranen einer Reihe verlaufen, kleiner ist als der Durchmesser der Membranen. In diesem Fall ist der Abstand zwischen der Oberfläche, auf die die erste Schicht des Klebers aufgetragen wird, und der Tangente an die Unterseite der Hohlfasermembranen einer Reihe kleiner als der Abstand zwischen der Oberfläche und der Tangente an die Oberseite der Membranen der zuvor eingelegten Reihe.

In einer Ausführung des erfindungsgemäßen Verfahrens ist der Abstandhalter für das Gießmaterial undurchlässig und das Gießmaterial wird auf den Abstandhalter gegossen. Dazu wird der Abstandhalter abdichtend in den Header eingebracht, so dass im Bereich zwischen dem Abstandhalter und den offenen Enden ein Gießraum entsteht, der entsprechend einer Wanne gegenüber dem eingefüllten Gießmaterial dicht ist. In diesen Gießraum wird anschließend das Gießmaterial eingefüllt und direkt auf den Abstandhalter gegossen, während die offenen Enden oben aus dem Gießmaterial herausschauen. Dadurch entfällt die bei dem bekannten Verfahren gegebene Notwendigkeit der Verwendung eines Gels, in das die offenen Enden der Hohlfasermembranen getaucht werden, und das hinterher wieder herausgelöst werden muss.

Das Gießmaterial wird dabei in der Regel nur so weit auf den Abstandhalter gegossen, dass die offenen Enden der Hohlfasermembranen um etwa 5 bis 20 mm aus der eingegossenen Schicht des Gießmaterials herausragen. Dadurch wird das Verfahren unempfindlich gegenüber fertigungsbedingten LängenToleranzen der Hohlfasermembranen im Bereich der offenen Enden.

Bei einer vorteilhaften Ausgestaltung des erfindungsgemäßen Verfahrens ist die Oberfläche eine Innenseite einer offenen Hülle, die geschlossen wird, nachdem alle Hohlfasermembranen eingelegt sind und die letzte Schicht des Klebers aufgetragen wurde. Nach dem Schließen der Hülle umschließt diese den Kleber mit den eingelegten Hohlfasermembranen. In diesem Fall gehört zu dem Membranblock nicht nur der Abstandhalter mit den eingelegten Membranen sondern auch die Hülle. Die Verwendung der Hülle hat den Vorteil, dass die Wartezeit entfällt, bis dass der ausgehärtete Abstandhalter von der Oberfläche abgenommen werden kann. Der Kleber verbleibt bis zu seiner Aushärtung und auch darüber hinaus auf der Innenseite der Hülle, d.h. er wird gar nicht mehr von der Oberfläche abgenommen. Durch die Verwendung der Hülle ist somit die Weiterverarbeitung, bzw. das Handling des Membranblocks unabhängig von der Aushärtungszeit des Klebers. Ein weiterer Vorteil der Hülle ist es, dass diese in ihrer Form frei gestaltbar ist. So kann die Hülle derart gestaltet werden, dass sie nach dem Schließen passgenau in den Header eingebracht werden kann. Das kann beispielsweise durch einen Klick-Mechanismus erfolgen, über den die Hülle in den Header eingeklickt wird. Zudem kann die Hülle derart gestaltet werden, dass sie die Fasern auf der Seite der offenen Enden enger zusammendrückt, um den Membranblock leichter in den Header einbringen zu können.

In einer bevorzugten Ausführung des erfindungsgemäßen Verfahrens besteht die Hülle aus einer Schale und einem von der Schale getrennten Deckel, wobei der Kleber und die Hohlfasermembranen in die Schale eingebracht werden und anschließend der Deckel die Hülle schließt. Die Schale und der Deckel können beispielsweise als Spritzgussteile konzipiert werden.

In einer weiteren vorteilhaften Ausführung des erfindungsgemäßen Verfahrens wird die Hülle beim Einbringen des Membranblocks in den Header mit dem Header verklebt. In diesem Fall ist es vorteilhaft, die Hülle und den Header aus Materialien zu gestalten, die miteinander verklebt werden können, wie z.B. PVC oder ABS-Kunststoffen. Die Verklebung hat den Vorteil, dass die Verbindungsstelle von Hülle und Header gegenüber dem flüssigen Gießmaterial abgedichtet wird.

Im Rahmen dieses erfindungsgemäßen Verfahrens ist es vorteilhaft, dass die offenen Enden aus der Hülle herausragen und in den Header hineinragen und dass eine Verbindungsstelle zwischen dem Header und der Hülle von dem Gießmaterial eingebettet wird. Die Verbindungsstelle zwischen der Hülle und dem Header hat in diesem Fall hauptsächlich die Funktion, einen Gießraum zu schaffen, der für das flüssige Gießmaterial undurchlässig ist, so dass die Gießlösung auf den Abstandhalter gegossen werden kann. Die Fixierung der Hohlfasermembranen im Header und die Dichtungsfunktion zwischen Permeat-Raum und zu filtrierender Flüssigkeit wird über den Bereich der Dichtungsschicht im Header gewährleistet.

Ein weiterer Vorteil der Verwendung einer Hülle als Teil des Membranblocks ist es, dass die Dicke der Hülle und damit die Dicke der Wandung des Membranfilters im Bereich der aus dem Header austretenden Hohlfasermembranen unabhängig von der Gestaltung des Headers gestaltet werden kann.

Da der Header das Gewicht der Membranen trägt und zudem beim Filtrations- und Rückspülbetrieb einer kontinuierlichen Druck-Wechsel-Beanspruchung ausgesetzt ist, werden aus Festigkeitsgründen an die Wandstärken des Headers in der Regel Mindestanforderungen gestellt. Aus strömungstechnischen Gründen sind jedoch im Bereich des Austritts der Hohlfasermembranen aus dem Header möglichst dünne Wandstärken vorteilhaft, da sie die Hohlfasermembranen näher an den Strömungsraum bringen, der den Header umgibt, was sich positiv auf die Spülung der Hohlfasermembranen auswirkt.

Ist die Wandung, die den Membranblock im Bereich des Austritts der Hohlfasermembranen umgibt, Teil des Headers, so kann diese jedoch nur begrenzt dünnwandig gestaltet werden, da innerhalb eines Spritzguss-Bauteils in der Regel nicht zu stark unterschiedliche Wandstärken realisiert werden können.

Durch die Gestaltung des Membranfilters mit einer Hülle wird die Wandstärke im Bereich des Austritts der Hohlfasermembranen entkoppelt von der Gestaltung des Headers und kann daher auch sehr dünnwandig sein, bis hin zur Verwendung von Folien als Hülle. Dies führt zu einer verbesserten Spülung der Membranen durch die den Header umgebende Strömung.

Bei einer bevorzugten Ausgestaltung eines Membranfilters, der nach dem erfindungsgemäßen Verfahren hergestellt wird, weist der Membranblock daher eine Hülle auf, die den Abstandhalter ringsum umgibt und die in den Header eingebracht ist.

Bei einer alternativen Gestaltung des erfindungsgemäßen Verfahrens wird auf die geschlossene Hülle ein Stabilisierungsring aufgeschoben und mit diesem verklebt. In diesem Fall zählt auch der Stabilisierungsring zum Membranblock. Vorteil eines solchen Stabilisierungsringes ist es, die dünnwandige Hülle zu stabilisieren. Darüber hinaus ermöglicht die Verwendung eines separaten Stabilisierungsrings eine präzise und passgenaue Gestaltung der Verbindungsstelle von Header und Membranblock.

Es ist vorteilhaft, wenn der Stabilisierungsring aufgeklebt wird solange der Kleber der letzten Schicht noch klebrig ist. Besteht beispielsweise die erfindungsgemäße Hülle aus einer Schale und einem Deckel, so tritt häufig beim Schließen der Hülle eine geringe Menge Kleber zwischen Hülle und Deckel aus der Verbindungsnaht aus. Beim Aufkleben des Verstärkungsrings wird der noch nicht ausgehärtete heraustretende Kleber von der Klebenaht des Stabilisierungsrings überdeckt. Der aufgeklebte Stabilisierungsring liefert somit bereits im noch nicht ausgehärteten Zustand des Klebers einen Membranblock mit definierter, sauberer und präziserer Verbindungsstelle zum Header.

Bei einer vorteilhaften Ausführung eines erfindungsgemäßen Verfahrens wird der Stabilisierungsring beim Einbringen des Membranblocks in den Header mit dem Header verklebt. Dadurch wird auch die Verbindungsstelle zwischen Header und Stabilisierungsring dicht gegen das flüssige Gießmaterial abgeschlossen.

Im Rahmen des erfindungsgemäßen Verfahrens ist es vorteilhaft, dass die offenen Enden aus dem Stabilisierungsring herausragen und in den Header hineinragen und dass eine erste Verbindungsstelle zwischen dem Header und dem Stabilisierungsring und eine zweite Verbindungsstelle zwischen dem Stabilisierungsring und der Hülle von dem Gießmaterial eingebettet werden. Auch in diesem Fall ist alleine die Dichtschicht im Bereich des Headers für die Abdichtung des Permeat-Raumes gegenüber der zu filtrierenden Flüssigkeit verantwortlich. Somit haben die erste Verbindungsstelle zwischen der Hülle und dem Stabilisierungsring sowie die zweite Verbindungsstelle zwischen dem Stabilisierungsring und dem Header lediglich die Funktion, einen Gießraum zu schaffen, der für das flüssige Gießmaterial undurchlässig ist.

Bei einer bevorzugten Ausgestaltung eines Membranfilters, der nach dem erfindungsgemäßen Verfahren hergestellt wird, weist der Membranblock daher neben einer Hülle, die den Abstandhalter ringsum umgibt, zusätzlich einen Stabilisierungsring auf, der in den Header eingebracht ist.

Das erfindungsgemäße Verfahren kann darüber hinaus mit dem kontinuierlichen Produktionsprozess der Hohlfasermembranen kombiniert werden. Dabei werden die Hohlfasermembranen zum Einlegen in den Kleber unmittelbar einer Anlage zur Membran-Produktion entnommen. Die Membranen werden in der Regel kontinuierlich und endlos produziert. Es ist vorteilhaft, am Ende der Produktion einen Greifer vorzusehen, der die Membranen aus der Anlage herauszieht und in den Kleber ablegt. Nach dem Ablegen in den Kleber wird die Membran auf die gewünschte Länge abgeschnitten, während ein zweiter Greifer die Membran weiter aus der Produktionsanlage herauszieht. Bei dieser Art der Kopplung von Membran- und Modulproduktion ist es wichtig, dass bei Verwendung einer Hülle diese zunächst offen ist, damit die Schichten des Klebers und die Reihen der Membranen darin abgelegt werden können.

Auch bei der Kopplung von Membran- und Modulproduktion ist es vorteilhaft, wenn die Membranen in den Kleber niedergedrückt werden, so dass sie in diesen zumindest teilweise eintauchen. Im automatisierten Prozess kann das Niederdrücken über einen Niederhalter erfolgen, der die Membranen bis auf die gewünschte Tiefe in den Kleber niederdrückt. Dabei kann der Niederhalter derart gestaltet sein, dass er parallele Rillen an seiner Unterseite aufweist, in die die Membranen hineinpassen, um beim Niederdrücken einen gleichmäßigen Abstand der Membranen in der Reihe zu gewährleisten.

Das erfindungsgemäße Verfahren kann zur Produktion von Membranfiltern mit nur einem Header oder wahlweise auch zur Produktion von Membranfiltern mit zwei Headern eingesetzt werden. Zudem können mehrere Membranblöcke in einem Header untergebracht werden. Die Anzahl der Reihen von Membranen in einem Membranblock eines Membranfilters, der nach dem erfindungsgemäßen Verfahrens hergestellt wird, beträgt üblicherweise zwischen 3 und 9. Die Anzahl der Hohlfasermembranen in einer Reihe kann dabei bis zu mehreren hundert Hohlfasermembranen betragen. Je nach Aushärtungszeit des Klebers können auch mehrere kürzere Reihen mit weniger Hohlfasermembranen innerhalb einer Ebene nebeneinander positioniert werden. Zudem können die Hohlfasermembranen einzeln oder mit mehreren gleichzeitig in den Kleber eingelegt werden.

Bei der Realisierung größerer Filtereinheiten können mehrere Membranfilter, die nach dem erfindungsgemäßen Verfahren hergestellt werden, auf einem gemeinsamen Rahmen parallel nebeneinander montiert werden. Dabei werden die Permeat-Auslässe der einzelnen Membranfilter mit Rohrleitungen verbunden, die der Ableitung des entstehenden Permeats aus den Membranfiltern dienen.

Beim Einsatz der Membranfilter in Membranbioreaktoren zur Abwasseraufbereitung weisen die Membranfilter zudem einen Gaseinlass auf. Bei der gemeinsamen Montage mehrerer Membranfilter auf einem Rahmen werden auch die Gaseinlässe mit Rohrleitungen verbunden, die der Zuführung des Gases in die Membranfilter dienen.

### Ausführungsbeispiele

Die Erfindung wird nachfolgend anhand von Ausführungsbeispielen erläutert. Es zeigen
- Fig. 1a: einen ersten Membranfilter,
- Fig. 1b: einen Membranblock des ersten Membranfilters,
- Fig. 2a bis 2h: Schritte zur Herstellung des Membranblocks,
- Fig. 3: ein Detail der Herstellung des ersten Membranfilters,
- Fig. 4a bis 4c: Schritte zur Herstellung eines zweiten Membranfilters,
- Fig. 5a bis 5b: weitere Schritte zur Herstellung des zweiten Membranfilters,
- Fig. 6a bis 6c: Schritte zur Herstellung eines dritten Membranfilters,
- Fig. 7: ein Detail der Herstellung des Membranblocks des zweiten Membranfilters und
- Fig. 8: Details des dritten Membranfilters.

Die in den Figuren dargestellten Zeichnungen sind schematisch und nicht maßstäblich. Alle nicht angegebenen Details von im Folgenden beschriebenen erfindungsgemäßen Membranfiltern und Verfahren sind identisch mit den Ausführungen bereits zuvor beschriebener erfindungsgemäßer Membranfilter und Verfahren.

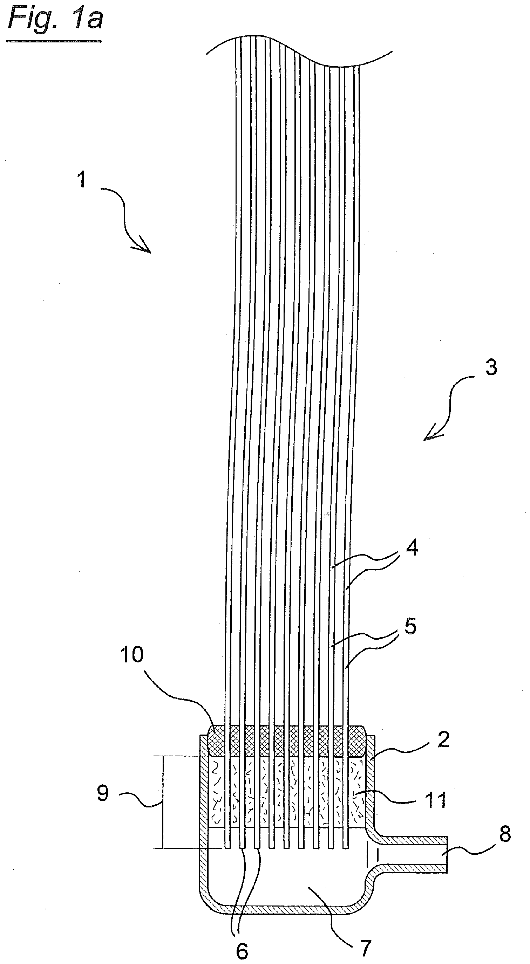

Die Figur 1a zeigt schematisch einen Schnitt durch einen nach einem ersten erfindungsgemäßen Verfahren hergestellten ersten Membranfilter 1. Der Membranfilter 1 hat unten einen Header 2, und einen Membranblock 3, der mit dem Header 2 verbunden ist. Der Membranblock 3 weist mehrere Reihen 4 weitgehend parallel angeordneter Hohlfasermembranen 5 auf. Die Hohlfasermembranen 5 haben eine Länge von zwei Metern und einen Durchmesser von 2,6 Millimetern. Jede der Hohlfasermembranen 5 weist unten ein offenes Ende 6 auf, das an einen Permeat-Raum 7 in dem Header 2 anschließt, aus dem im Betrieb des Membranfilters 1 über einen Permeat-Auslass 8 ein Filtrat abgezogen werden kann. Der Membranblock 3 weist in einer Distanz 9 von den offenen Enden 6 einen Abstandhalter 10 auf, der die Hohlfasermembranen 5 miteinander verbindet. Die Hohlfasermembranen 5 sind zwischen dem Abstandhalter 10 und den offenen Enden 6 von einer Dichtungsschicht 11 umgeben, die die Hohlfasermembranen 5 in dem Header 2 fixiert und den Permeat-Raum 7 gegenüber der Flüssigkeit abdichtet.

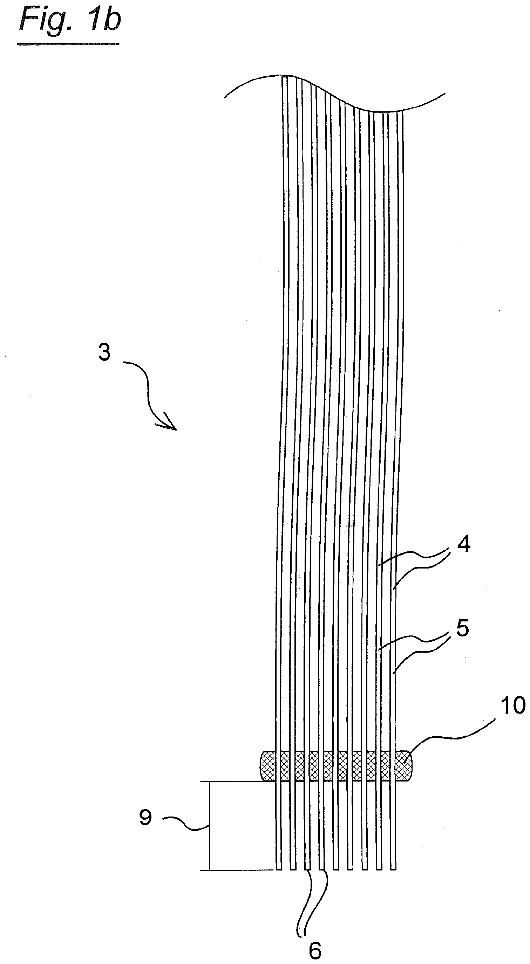

Die Figur 1b zeigt schematisch einen Schnitt durch den Membranblock 3 des ersten Membranfilters 1. Der Abstandhalter 10 beabstandet die Hohlfasermembranen 5 voneinander und verbindet sie gleichzeitig miteinander. Dargestellt ist nur der untere Teil der Hohlfasermembranen 5. Die oberen, nicht gezeigten Enden der Hohlfasermembranen 5 sind ebenfalls offen und in einer Distanz von einem weiteren Abstandhalter umgeben, um sie auf die gleiche Weise in einem zweiten baugleichen Header zu fixieren, abzudichten und offen an einen zweiten Permeat-Raum anzuschließen. Weder das zweite Ende der Membranen, noch der zweite Abstandhalter und der zweite Header sind in den Zeichnungen dargestellt.

Ein anderes nicht gezeigtes Ausführungsbeispiel ist weitgehend identisch mit dem ersten Membranfilter, weist jedoch keinen zweiten, oberen Header auf. Die Hohlfasermembranen 5 sind in diesem Fall oben einzeln verschlossen und nicht fixiert, d.h. sie können sich frei in der zu filtrierenden Flüssigkeit bewegen.

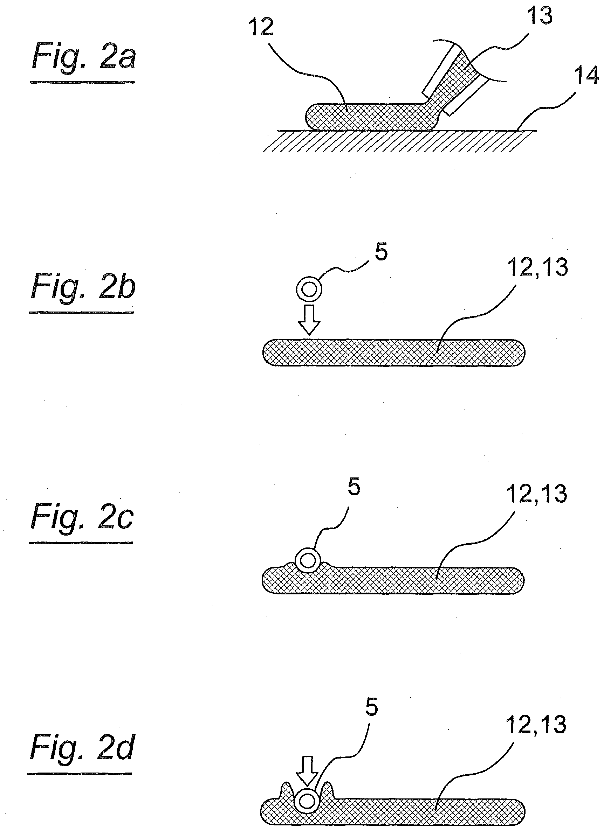

Die Figuren 2a bis 2h zeigen schematisch Schritte zur Herstellung des ersten Membranfilters 1. Dabei werden die Details der Herstellung des Membranblocks 3 gezeigt. Zunächst wird eine erste Schicht 12 eines Klebers 13 auf eine Oberfläche 14 aufgetragen. Die Oberfläche 14 wird in den weiteren Zeichnungen nicht weiter mit dargestellt. Der Kleber 13 ist ein neutral vernetzendes, pastöses Silikon.

In Figur 2b und Figur 2c wird eine erste Hohlfasermembran 5 in die erste Schicht 12 des Klebers 13 eingelegt.

In Figur 2d wird die erste eingelegte Hohlfasermembran 5 in den Kleber 13 niedergedrückt, so dass diese etwa 1,5 mm in die aufgetragene erste Schicht 12 des Klebers 13 eintaucht.

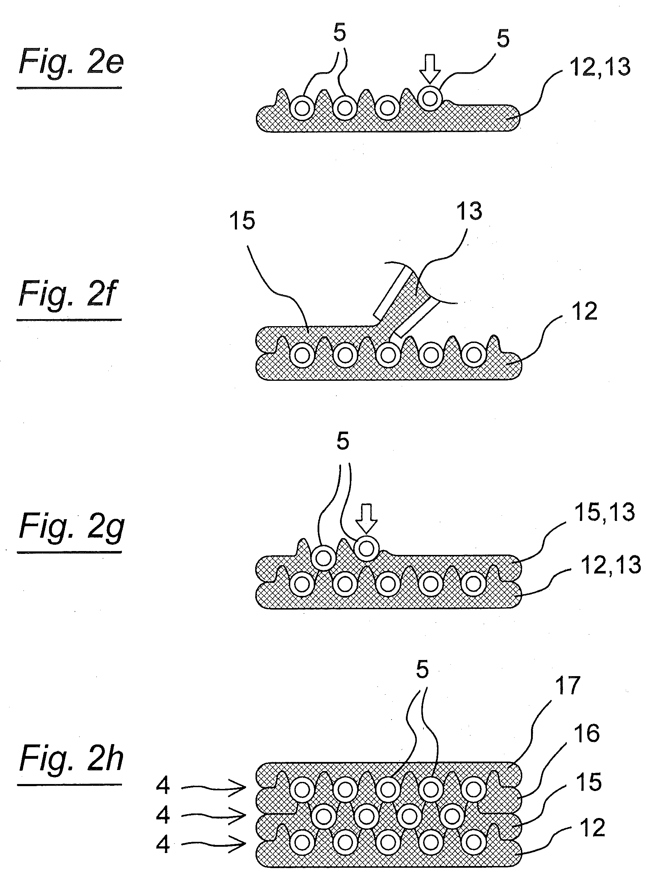

Figur 2e zeigt, wie weitere Hohlfasermembranen 5 in die erste Schicht 12 des Klebers 13 eingelegt und niedergedrückt werden. Dabei werden die Hohlfasermembranen 5 einzeln nacheinander in den Kleber 13 eingelegt und dann niedergedrückt.

Figur 2f zeigt das Auftragen einer zweiten Schicht 15 des Klebers 13 auf die zuvor aufgetragene erste Schicht 12 mit fünf eingelegten Hohlfasermembranen. Dadurch werden die Hohlfasermembranen 5 der ersten Schicht 12 ringsum von dem Kleber 13 umhüllt.

Figur 2g zeigt das Einlegen und Niederdrücken weiterer Hohlfasermembranen 5 in die zweite Schicht 15 des Klebers 13. Dabei werden die Hohlfasermembranen 5 der zweiten Schicht 15 jeweils in einen Zwischenraum der in der ersten Schicht 12 eingelegten Hohlfasermembranen 5 positioniert. Das anschließende Niederdrücken der Hohlfasermembranen 5 erfolgt so weit, bis die Unterseite der Hohlfasermembranen 5 in der zweiten Schicht 15 geringfügig tiefer positioniert ist als die Oberseite der Hohlfasermembranen 5, die in die erste Schicht 12 eingelegt ist.

In Figur 2h ist der Membranblock 3 mit einer dritten Schicht 16 und einer vierten Schicht 17 des Klebers 13 gezeigt. In die 4 Schichten (12, 15, 16, 17) des Klebers 13 sind drei Reihen 4 von Hohlfasermembranen 5 eingelegt. Das Einlegen und Niederdrücken der Hohlfasermembranen in die dritte Schicht 16 erfolgt dabei analog zu der Vorgehensweise bei der zweiten Schicht 15. Nach Auftragen aller Schichten des Klebers und Einlegen, bzw. Niederdrücken aller Hohlfasermembranen 5 des Membranblocks 3 härtet der Kleber 13 zu dem Abstandhalter 10 aus.

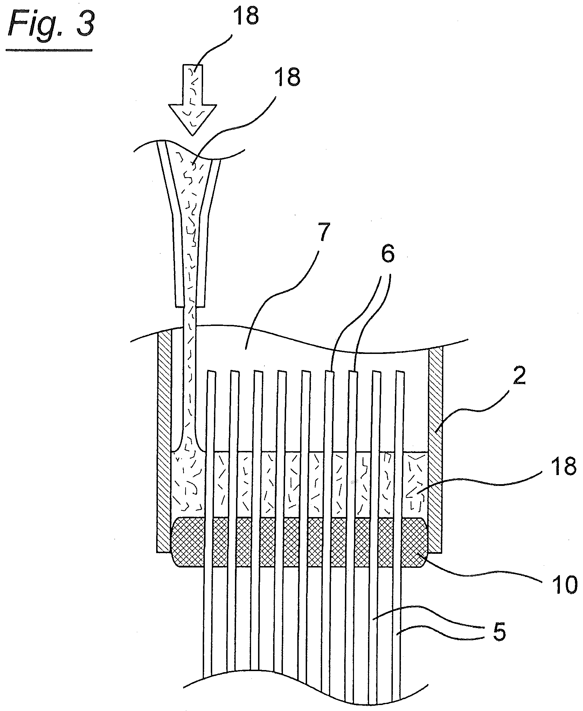

Figur 3 zeigt ein weiteres Detail des ersten erfindungsgemäßen Verfahrens, bei dem ein Gießmaterial 18 zwischen den Abstandhalter 10 und die offenen Enden 6 der Hohlfasermembranen 5 eingebracht wird. Dabei wird das flüssige Gießmaterial 18 auf den Abstandhalter 10 gegossen. Der Membranblock 3 wurde zuvor in den Header 2 derart eingebracht, dass er zusammen mit dem Header 2 eine gegen das Gießmaterial 18 dichte Wanne bildet. Das Gießmaterial 18 füllt diese Wanne so weit, dass die offenen Enden 6 aus der Schicht des Gießmaterials 18 herausschauen. Nach dem Einbringen des Gießmaterials 18 härtet dieses zu der Dichtungsschicht 11 aus, die die Hohlfasermembranen 5 in dem Header 2 fixiert und den Permeat-Raum 7 gegenüber der Flüssigkeit abdichtet. Als Gießmaterial wird dabei ein Epoxidharz, das aus zwei Komponenten zusammengemischt wird, verwendet.

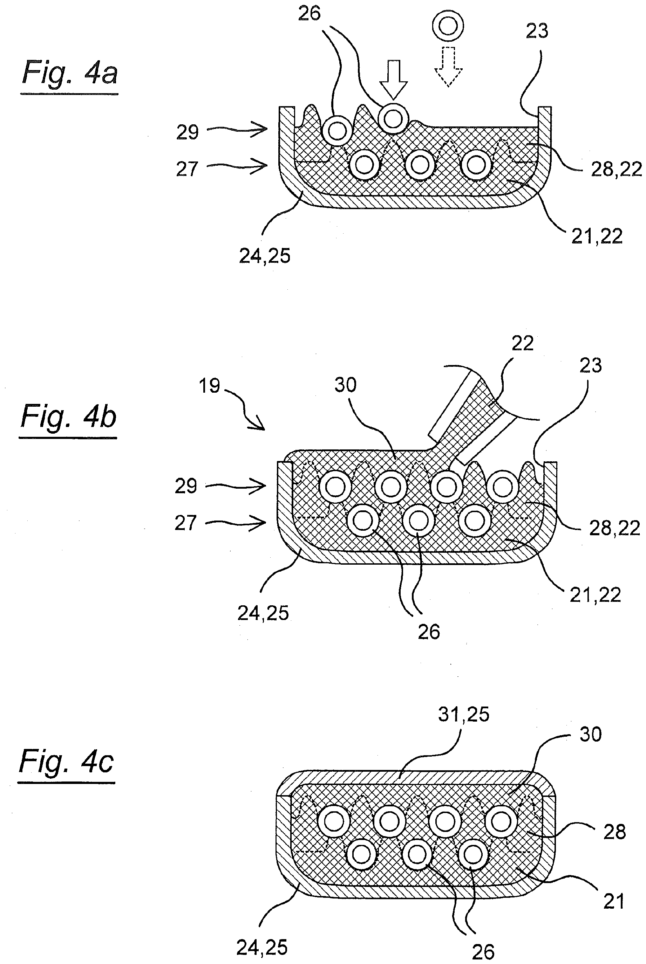

Die Figuren 4a bis 4c zeigen schematisch Detail-Schritte zur Herstellung eines Membranblocks 19 eines zweiten Membranfilters 20 nach einem zweiten erfindungsgemäßen Verfahren. Dabei wird zunächst eine erste Schicht 21 eines Klebers 22 auf die Innenseite 23 einer offenen Schale 24 aufgetragen, die Teil einer Hülle 25 ist. In die erste Schicht 21 werden Hohlfasermembranen 26 eingelegt und anschließend niedergedrückt. Nachdem alle Hohlfasermembranen 26 einer ersten Reihe 27 von Hohlfasermembranen 26 eingelegt sind, wird eine zweite Schicht 28 des Klebers 22 auf die erste Schicht 21 aufgetragen, so dass die eingelegten Hohlfasermembranen 26 der ersten Reihe 27 von dem Kleber 22 ringsum umhüllt sind. Dabei grenzt die zweite Schicht 28 an den Seiten ebenfalls an die Innenseite 23 der offenen Schale 24. In die zweite Schicht 28 werden dann die Hohlfasermembranen 26 einer zweiten Reihe 29 eingelegt und anschließend niedergedrückt.

Figur 4b zeigt das Auftragen einer dritten Schicht 30 des Klebers 22 auf die in die zweite Schicht 28 des Klebers 22 eingelegten Hohlfasermembranen 26 der zweiten Reihe 29. Der Vorgang des Einlegens und Niederdrückens von Hohlfasermembranen 26 einer weiteren Reihe und das anschließende Auftragen einer weiteren Schicht des Klebers werden so lange wiederholt, bis sieben Hohlfasermembranen 26 des Membranblocks 19 eingelegt sind.

In anderen, hier nicht dargestellten Ausführungsbeispielen ist die Anzahl der Hohlfasermembranen pro Reihe und die Anzahl der Reihen in dem Membranblock unterschiedlich von der hier gezeigten schematischen Darstellung. Die Anzahl der Hohlfasermembranen in den einzelnen Reihen kann dabei auch variieren. Dies ist insbesondere der Fall, wenn die Schale nach oben breiter wird. Dadurch wird im Randbereich das Auftragen des Klebers und das Einlegen der Hohlfasermembranen erleichtert. Typischerweise liegt die Anzahl der Hohlfasermembranen pro Reihe zwischen 15 und 60 je nach Größe des Membranblocks.

Figur 4c zeigt das Aufbringen eines Deckels 31 auf die letzte Schicht 30 des Klebers 22. Der Deckel 31 schließt die Hülle 25. Die geschlossene Hülle 25, bestehend aus der Schale 24 und dem aufgebrachten Deckel 31 umschließt die Schichten (21, 28, 30) des Klebers 22 und die darin eingelegten Hohlfasermembranen 25. Nach Auftragen aller Schichten (21, 28, 30) und Einlegen, bzw. Niederdrücken aller Hohlfasermembranen 25 härtet der Kleber 22 zu dem Abstandhalter aus.

Die Schale 24 und der Deckel 31 haben dabei eine Breite von 3 cm und die Schichten des Klebers 22 eine Breite von 2 cm.

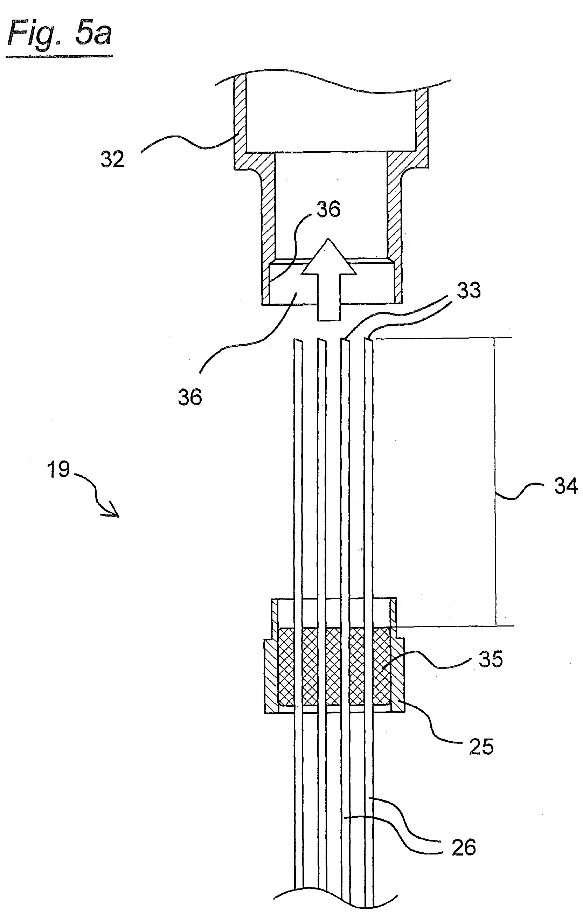

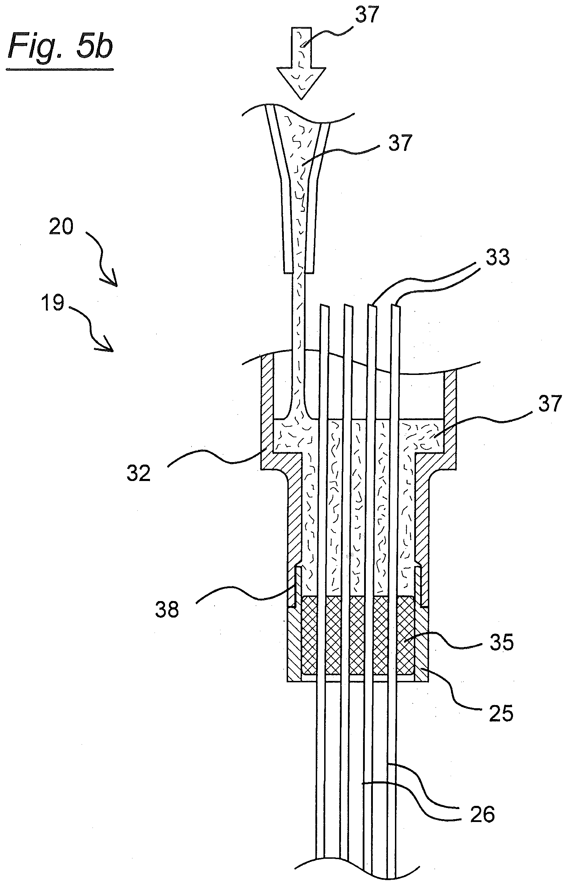

Die Figuren 5a und 5b zeigen schematisch weitere Detail-Schritte zur Herstellung des zweiten Membranfilters 20. In Figur 5a ist zunächst das Einbringen des Membranblocks 19 in einen Header 32 gezeigt. Der Membranblock 19 weist mehrere Reihen von Hohlfasermembranen 26 auf, die auf einer Seite ein offenes Ende 33 aufweisen. Das nicht dargestellte Ende auf der anderen Seite der Hohlfasermembranen 26 ist einzeln verschlossen und nicht fixiert. In einer Distanz 34 von den offenen Enden 33 weist der Membranblock 19 den Abstandhalter 35 auf, der die Hohlfasermembranen 26 beabstandet und miteinander verbindet. Der Abstandhalter 35 besteht nur aus dem ausgehärteten Kleber 22, in den die Hohlfasermembranen 26 eingelegt wurden, solange der Kleber 22 noch nicht ausgehärtet war. Der Abstandhalter 35 und die Hohlfasermembranen 26 im Membranblock 19 sind von der geschlossenen Hülle 25 umgeben, die passgenau in eine Öffnung 36 des Headers 32 hineinpasst. Auf die Innenseite der Öffnung 36 wird ein Verbindungsmittel aufgetragen, um die Hülle 25 des Membranblocks 19 mit dem Header 32 zu verkleben.

Figur 5 b zeigt den mit dem Header 32 verklebten Membranblock 19 des zweiten Membranfilters 20, wobei auf den Abstandhalter 35 ein Gießmaterial 37 gegossen wird. Die Hohlfasermembranen 26 ragen dabei aus der Hülle 25 heraus und ragen gleichzeitig in den Header 32 hinein. Die Verbindungsstelle 38 zwischen dem Header 32 und der Hülle 25 wird von dem Gießmaterial 37 eingebettet und die Hohlfasermembranen 26 werden zwischen dem Abstandhalter 35 und den offenen Enden 33 von dem Gießmaterial 37 umschlossen. Als Gießmaterial 37 wird ein Epoxidharz aus zwei Komponenten verwendet. Nach Aushärten des Gießmaterials 37 bildet dieses eine Dichtungsschicht, die die Hohlfasermembranen 26 in dem Header 32 fixiert.

Die Figur en 6a bis 6d zeigen Detail-Schritte zur Herstellung eines dritten Membranfilters 39 nach einem dritten erfindungsgemäßen Verfahren.

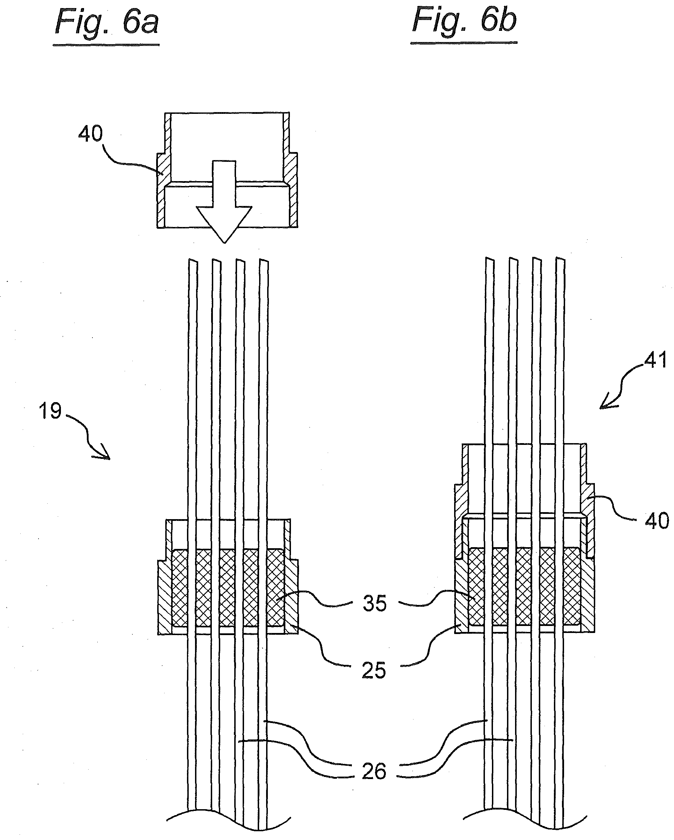

Figur 6a zeigt einen zu dem Membranblock 19 des zweiten Membranfilters identischen Membranblock mit Hohlfasermembranen 26 und dem Abstandhalter 35, die von einer Hülle 25 umgeben sind. Auf den Membranblock 19 wird ein Stabilisierungsring 40 aufgeschoben und mit der Hülle 25 verklebt.

Figur 6b zeigt den Membranblock 41 des dritten Membranfilters 39 mit aufgeklebtem Stabilisierungsring 40, aus dem die offenen Enden 33 der Hohlfasermembranen 26 herausragen. Der Stabilisierungsring 40 ist in diesem Fall Teil des Membranblocks 41.

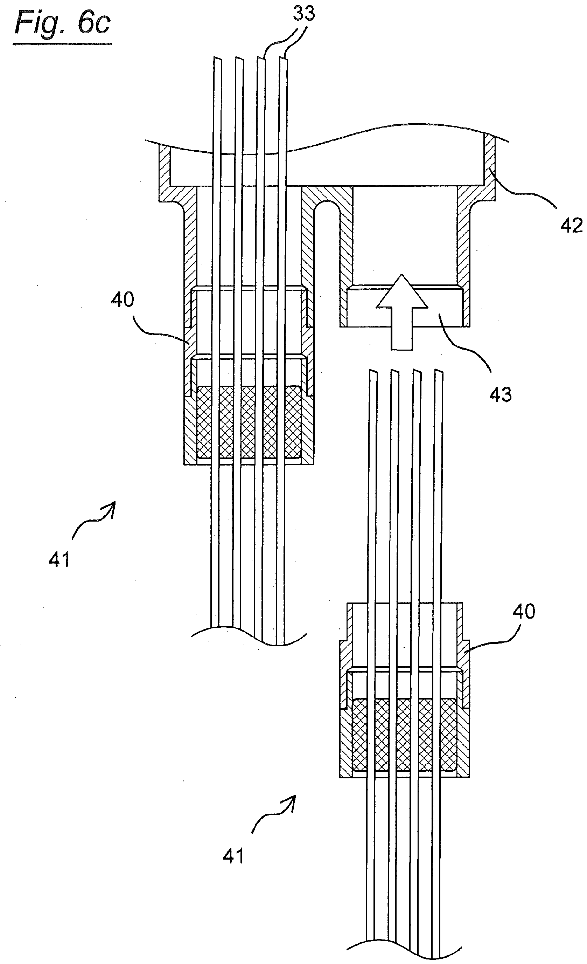

Figur 6c zeigt das Einbringen der beiden Membranblöcke 41 in einen Header 42 des Membranfilters 39. Der Stabilisierungsring 40 passt dabei passgenau in die dafür vorgesehenen Öffnungen 43 des Headers 42. Die offenen Enden 33 ragen aus dem Stabilisierungsring 40 heraus. Nach dem Einbringen des Membranblocks 41 in den Header 42 ragen die offenen Enden 33 in den Header 42 hinein.

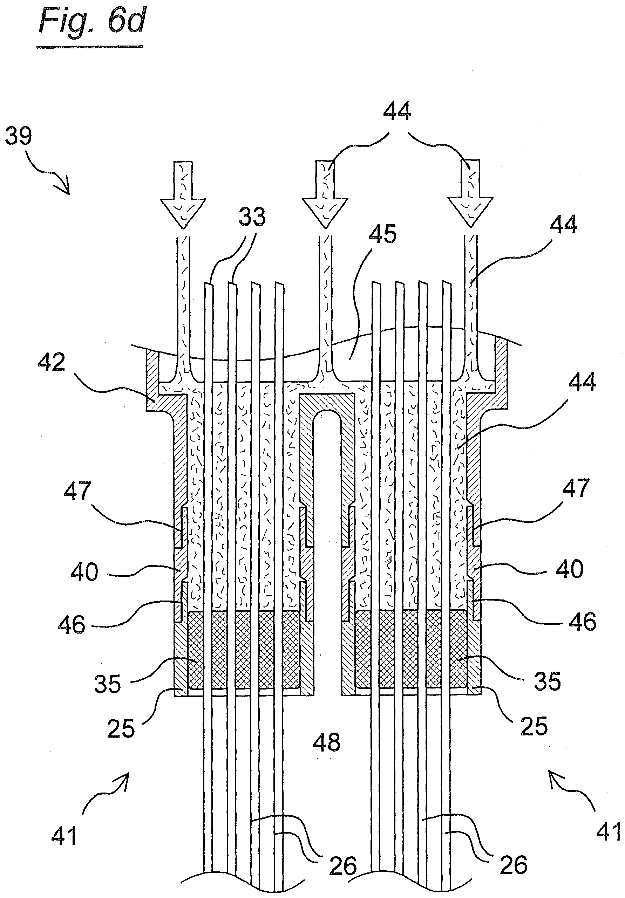

Figur 6d zeigt das Einbringen eines flüssigen Gießmaterials 44 zwischen die beiden Abstandhalter 35 und die offenen Enden 33 der Hohlfasermembranen 26. Das Gießmaterial 44 ist ein flüssiges Harz, das von einem Permeat-Raum 45 aus an drei Stellen neben den Hohlfasermembranen 26 auf die beiden Abstandhalter 35 gegossen wird. Das Gießmaterial 44 bettet dabei die erste Verbindungsstelle 46 zwischen der Hülle 25 und dem Stabilisierungsring 40 und die zweite Verbindungsstelle 47 zwischen dem Stabilisierungsring 35 und dem Header 42 ein. Nach Aushärten des Gießmaterials 44 zu einer Dichtungsschicht sind die Hohlfasermembranen 26 in dem Header 42 fixiert und der Permeat-Raum 45 ist gegenüber dem Außenraum 48 der Hohlfasermembranen 26, der mit der zu filtrierenden Flüssigkeit beaufschlagt wird, abgedichtet. Aus dem Permeat-Raum 45 kann dann im Betrieb ein Filtrat abgezogen werden. Von dem Header 42 ist nur der Teil dargestellt, in den die Membranblöcke 41 eingebracht werden.

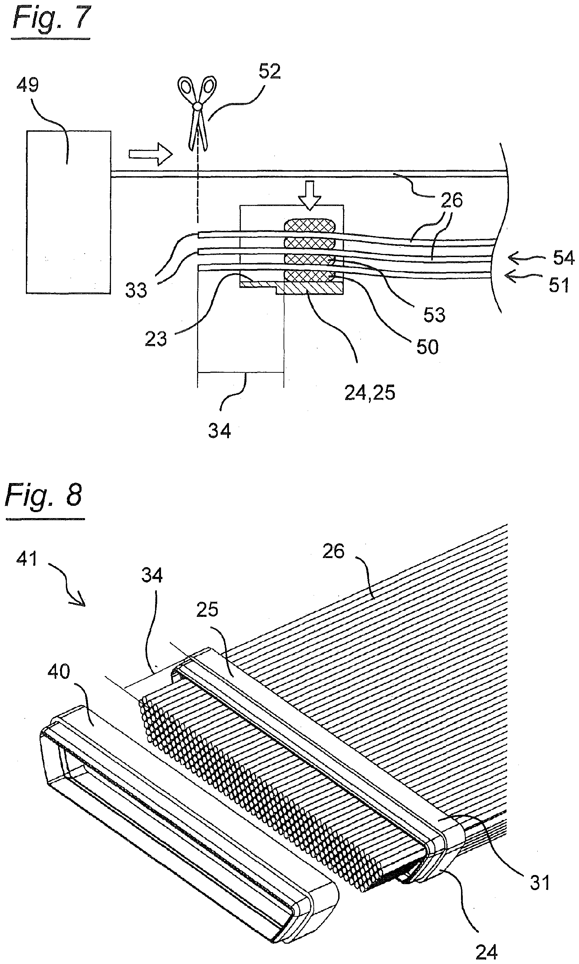

Figur 7 zeigt Details eines vierten erfindungsgemäßen Verfahrens, bei dem Hohlfasermembranen 26 zur automatisierten Herstellung des Membranblocks 19 des zweiten Membranfilters 20 unmittelbar einer Anlage 49 zur Membran-Produktion entnommen werden. Die Hohlfasermembranen 26 werden mit einem nicht dargestellten Greifer aus der Anlage 49 herausgezogen. Auf einem nicht dargestellten Schlitten wird eine Schale 24 als offene Hülle 25 platziert, auf deren innere Oberfläche 23 eine erste Schicht 50 eines Klebers 22 aufgetragen wird. Anschließend wird eine erste Reihe 51 von Hohlfasermembranen 26 durch Wiederholen der folgenden Schritte in die erste Schicht 50 des Klebers 22 eingebettet bis alle Hohlfasermembranen 26 der ersten Reihe 51 eingelegt sind:
- Positionieren des Schlittens mit der Schale und der aufgetragenen ersten Schicht 50 des Klebers 22 unterhalb der aus der Anlage 49 kommenden Hohlfasermembran 26,
- Herausziehen der Hohlfasermembran 26 mit Hilfe des Greifers und anschließendes Halten der Holfasermembran 26 in der gewünschten Längsposition durch den Greifer,
- Einlegen der positionierten Hohlfasermembran 26 in die zuvor aufgetragene Schicht 50 des Klebers 22, und
- Abschneiden der Hohlfasermembranen 26 mit Hilfe einer Schneideeinrichtung 52 derart, dass die offenen Enden 33 der Hohlfasermembran 26 in der Distanz 34 von der aufgetragenen Schicht 50 des Klebers 22 entfernt sind.

Nachdem alle Hohlfasermembranen 26 der ersten Reihe 51 eingelegt sind, wird eine weitere Schicht 53 des Klebers 22 aufgetragen, in die die Hohlfasermembranen 26 einer weiteren Reihe 54 entsprechend der für die erste Reihe 51 beschriebenen Prozedur eingelegt werden. Nachdem alle Reihen von Hohlfasermembranen 26 auf diese Art und Weise in Schichten des Klebers eingebettet sind, wird die Hülle 25 durch Aufbringen des nicht dargestellten Deckels 31 verschlossen und der fertige Membranblock 19 kann von dem Schlitten zur Weiterverarbeitung herunter genommen werden.

In Figur 8 sind Details des dritten Membranfilters 39 zu sehen. Dabei sind Hohlfasermembranen 26 in einer Distanz 34 von einem nur aus Kleber aufgebauten Abstandhalter umgeben, der nicht zu sehen ist, da er von einer zweigeteilten Hülle 25 umgeben ist. Die Hülle 25 besteht aus einer Schale 24 und einem von der Schale 24 getrennten Deckel 31. Auf die Hülle 25 wird ein Stabilisierungsring 40 aufgeschoben und mit der Hülle 25 verklebt. Auf diese Weise entsteht ein Membranblock 41 der in den Header 42 des dritten Membranfilters eingesetzt wird.

Ein andere, hier nicht dargestellter Membranfilter wird in DE 102013218188 offenbart und beschrieben. Dieser weist einen Membranträger als Teil eines Fußelementes auf, das in diesem Fall den Header darstellt. Der Membranträger weist Finger auf, die mit Hohlfasermembranen 26 bestückt werden. Über das erfindungsgemäße Verfahren werden sechs Membranblöcke 41 hergestellt mit Außenkonturen, die in ihrem Umfang der Größe und Form der Finger entsprechen. Diese werden in das offenbarte Fußelement eingeklebt und anschließend von der Permeatseite her mit einem flüssigen Harz eingegossen.

Durch Aushärten des Harzes werden die Hohlfasermembranen 26 in dem Fußelement fixiert und der im Fußelement entstehende Permeat-Raum gegenüber dem mit zu filtrierender Flüssigkeit in Kontakt stehenden Außenraum der Hohlfasermembranen 26 abgedichtet.

### In den Figuren sind

- 1: Membranfilter
- 2: Header
- 3: Membranblock
- 4: Reihe
- 5: Hohlfasermembran
- 6: offenes Ende
- 7: Permeat-Raum
- 8: Permeat-Auslass
- 9: Distanz
- 10: Abstandhalter
- 11: Dichtungsschicht
- 12: erste Schicht
- 13: Kleber
- 14: Oberfläche
- 15: zweite Schicht
- 16: dritte Schicht
- 17: vierte Schicht
- 18: Gießmaterial
- 19: Membranblock
- 20: Membranfilter
- 21: erste Schicht
- 22: Kleber
- 23: Innenseite
- 24: offene Schale
- 25: Hülle
- 26: Hohlfasermembranen
- 27: erste Reihe
- 28: zweite Schicht
- 29: zweite Reihe
- 30: dritte Schicht
- 31: Deckel
- 32: Header
- 33: offenes Ende
- 34: Distanz
- 35: Abstandhalter
- 36: Öffnung
- 37: Gießmaterial
- 38: Verbindungsstelle
- 39: Membranfilter
- 40: Stabilisierungsring
- 41: Membranblock
- 42: Header
- 43: Öffnung
- 44: Gießmaterial
- 45: Permeat-Raum
- 46: erste Verbindungsstelle
- 47: zweite Verbindungsstelle
- 48: Außenraum
- 49: Anlage
- 50: erste Schicht
- 51: erste Reihe
- 52: Schneideeinrichtung
- 53: weitere Schicht
- 54: weitere Reihe

## Patentansprüche

1. Verfahren zur Herstellung eines Membranfilters (1, 20, 39) zum Filtern einer Flüssigkeit,
- wobei der Membranfilter (1, 20, 39) mindestens einen Header (2, 32, 42) aufweist und mindestens einen Membranblock (3, 19, 41), der mit dem Header (2, 32, 42) verbunden ist,
- wobei der mindestens eine Membranblock (3, 19, 41) mehrere Reihen (4) weitgehend parallel nebeneinander angeordneter Hohlfasermembranen (5,26) aufweist,
- wobei jede der Hohlfasermembranen (5,26) ein offenes Ende (6,33) aufweist, das an einen Permeat-Raum (7, 45) in dem mindestens einen Header (2, 32, 42) anschließt, und aus dem Permeat-Raum (7, 45) im Betrieb ein Filtrat abgezogen werden kann,
- wobei der mindestens eine Membranblock (3, 19, 41) in einer Distanz (9, 34) von den offenen Enden (6,33) einen Abstandhalter (10, 35) aufweist, der die Hohlfasermembranen (5,26) beabstandet und miteinander verbindet, und
- wobei die Hohlfasermembranen (5,26) zwischen dem Abstandhalter (10, 35) und den offenen Enden (6,33)
- von einer Dichtungsschicht (11) umgeben sind, die die Hohlfasermembranen (5,26) in dem Header (2, 32, 42) fixiert und den Permeat-Raum (7, 45) gegenüber der Flüssigkeit abdichtet,
und wobei das Verfahren folgende Schritte aufweist:
a) Bilden des mindestens einen Membranblocks (3, 19, 41),
b) Einbringen des mindestens einen Membranblocks (3, 19, 41) in den Header (2, 32, 42),
c) Einbringen eines flüssigen Gießmaterials (18, 37, 44) zwischen den Abstandhalter (10, 35) und die offenen Enden (6,33) derart, dass das Gießmaterial (18, 37, 44) die Hohlfasermembranen (5,26) umschließt und
d) Aushärten des Gießmaterials (18, 37, 44) zu der Dichtungsschicht (11),
***dadurch gekennzeichnet, dass*** der mindestens eine Membranblock (3, 19, 41) gebildet wird durch
e) Auftragen einer ersten Schicht (12, 50) eines Klebers (13, 22) auf eine Oberfläche (14),
f) anschließende Wiederholung der folgenden Schritte bis alle Hohlfasermembranen (5,26) des mindestens einen Membranblocks (3, 19, 41) eingelegt sind:
i. Einlegen der Hohlfasermembranen (5,26) einer der Reihen (4) in die zuvor aufgetragene Schicht (12, 50, 15, 16, 28, 53) des Klebers (13, 22), wobei die offenen Enden (6,33) in der Distanz (9, 34) zu der zuvor aufgetragenen Schicht (12, 50, 15, 16, 28, 53) des Klebers (13, 22) positioniert werden,
ii. Auftragen einer weiteren Schicht (15, 16, 17, 28, 30, 53) des Klebers (13, 22) auf die zuvor aufgetragene Schicht (12, 50, 15, 16, 28, 53), so dass die eingelegten Hohlfasermembranen (5,26) ringsum von dem Kleber (13, 22) umgeben sind,
g) und Aushärten des Klebers (13, 22) zu dem Abstandhalter (10, 35) .

2. Verfahren nach Anspruch 1, ***dadurch gekennzeichnet, dass*** die Hohlfasermembranen (5,26) nach dem Einlegen in den Kleber (13, 22) niedergedrückt werden, so dass sie in diesen zumindest teilweise eintauchen.

3. Verfahren nach Anspruch 1 oder 2, ***dadurch gekennzeichnet, dass*** das Auftragen einer weiteren Schicht (15, 16, 17, 28, 30, 53) des Klebers (13, 22) erfolgt, während der Kleber (13, 22) der zuvor aufgetragenen Schicht (12, 50, 15, 16, 28, 53) noch klebrig ist, und dass der Kleber (13, 22) erst zu dem Abstandhalter (10, 35) aushärtet, nachdem alle Hohlfasermembranen (5,26) eingelegt sind.

4. Verfahren nach einem der vorhergehenden Ansprüche, ***dadurch gekennzeichnet, dass*** der Abstandhalter (10, 35) für das Gießmaterial (18, 37, 44) undurchlässig ist und das Gießmaterial (18, 37, 44) auf den Abstandhalter (10, 35) gegossen wird.

5. Verfahren nach einem der vorhergehenden Ansprüche, ***dadurch gekennzeichnet, dass*** die Oberfläche (14) eine Innenseite (23) einer offenen Hülle (25) ist, die geschlossen wird, nachdem alle Hohlfasermembranen (5,26) eingelegt sind.

6. Verfahren nach Anspruch 5, ***dadurch gekennzeichnet, dass*** die Hülle (25) aus einer Schale (24) und einem von der Schale (24) getrennten Deckel (31) besteht, wobei der Kleber (13, 22) und die Hohlfasermembranen (5,26) in die Schale (24) eingebracht werden und anschließend der Decke (31) die Hülle (25) schließt.

7. Verfahren nach einem der Ansprüche 5 bis 6, ***dadurch gekennzeichnet, dass*** die Hülle (25) beim Einbringen des Membranblocks (3, 19, 41) in den Header (2, 32, 42) mit dem Header (2, 32, 42) verklebt wird.

8. Verfahren nach Anspruch 7, ***dadurch gekennzeichnet, dass*** die offenen Enden (6,33) aus der Hülle (25) herausragen und in den Header (2, 32, 42) hineinragen und dass eine Verbindungsstelle (38) zwischen dem Header (2, 32, 42) und der Hülle (25) von dem Gießmaterial (18, 37, 44) eingebettet wird.

9. Verfahren nach einem der Ansprüche 5 bis 6, ***dadurch gekennzeichnet, dass*** auf die Hülle (25) ein Stabilisierungsring (40) aufgeschoben und mit der Hülle (25) verklebt wird.

10. Verfahren nach Anspruch 9, ***dadurch gekennzeichnet, dass*** der Stabilisierungsring (40) beim Einbringen des Membranblocks (3, 19, 41) in den Header (2, 32, 42) mit dem Header (2, 32, 42) verklebt wird.

11. Verfahren nach Anspruch 10, ***dadurch gekennzeichnet, dass*** die offenen Enden (6,33) aus dem Stabilisierungsring (40) herausragen und in den Header (2, 32, 42) hineinragen und dass eine erste Verbindungsstelle (46) zwischen dem Header (2, 32, 42) und dem Stabilisierungsring (40) und eine zweite Verbindungsstelle (47) zwischen dem Stabilisierungsring (40) und der Hülle (25) von dem Gießmaterial (18, 37, 44) eingebettet werden.

12. Verfahren nach einem der vorhergehenden Ansprüche, ***dadurch gekennzeichnet, dass*** die Hohlfasermembranen (5,26) zum Einlegen in den Kleber (13, 22) unmittelbar einer Anlage (49) zur Membran-Produktion entnommen werden.

## Claims

1. Method for producing a membrane filter (1, 20, 39) for filtering a liquid,
- wherein the membrane filter (1, 20, 39) has at least one header (2, 32, 42) and at least one membrane block (3, 19, 41) which is connected to the header (2, 32, 42),
- wherein the at least one membrane block (3, 19, 41) has multiple rows (4) of hollow fibre membranes (5, 26) which are arranged side by side and substantially parallel to one another,
- wherein each of the hollow fibre membranes (5, 26) has an open end (6, 33) which adjoins a permeate chamber (7, 45) in the at least one header (2, 32, 42), and a filtrate can be drawn off from the permeate chamber (7, 45) during operation,
- wherein the at least one membrane block (3, 19, 41) has a spacer (10, 35) at a distance (9, 34) from the open ends (6, 33), which connects the hollow fibre membranes (5, 26) to one another while keeping them apart, and
- wherein the hollow fibre membranes (5, 26) are surrounded, between the spacer (10, 35) and the open ends (6, 33),
- by a seal layer (11) that secures the hollow fibre membranes (5, 26) in the header (2, 32, 42) and seals the permeate chamber (7, 45) with respect to the liquid,
and wherein the method has the following steps:
a) forming the at least one membrane block (3, 19, 41),
b) introducing the at least one membrane block (3, 19, 41) into the header (2, 32, 42),
c) introducing a liquid casting material (18, 37, 44) between the spacer (10, 35) and the open ends (6, 33) in such manner that the casting material (18, 37, 44) surrounds the hollow fibre membranes (5, 26), and
d) solidifying the casting material (18, 37, 44) to form the seal layer (11),
**characterized in that** the at least one membrane block (3, 19, 41) is formed by
e) applying a first layer (12, 50) of an adhesive (13, 22) to a surface (14),
f) then repeating the following steps until all of the hollow fibre membranes (5, 26) of the at least one membrane block (3, 19, 41) have been laid in:
i. laying the hollow fibre membranes (5, 26) of one of the rows (4) into the previously applied layer (12, 50, 15, 16, 28, 53) of the adhesive (13, 22), wherein the open ends (6, 33) are positioned at the distance (9, 34) from the previously applied layer (12, 50, 15, 16, 28, 53) of the adhesive (13, 22),
ii. applying a further layer (15, 16, 17, 28, 30, 53) of the adhesive (13, 22) to the previously applied layer (12, 50, 15, 16, 28, 53) so that the laid hollow fibre membranes (5, 26) are completely surrounded by the adhesive (13, 22),
g) and solidifying the adhesive (13, 22) to form the spacer (10, 35).

2. Method according to Claim 1, **characterized in that** after being laid in the adhesive (13, 22) the hollow fibre membranes (5,26) are pressed down so that they are at least partially immersed therein.

3. Method according to Claim 1 or 2, **characterized in that** the application of a further layer (15, 16, 17, 28, 30, 53) of the adhesive (13, 22) takes place while the adhesive (13, 22) of the previously applied layer (12, 50, 15, 16, 28, 53) is still tacky, and that the adhesive (13, 22) is not cured to form the spacer (10, 35) until all the hollow fibre membranes (5, 26) have been laid in.

4. Method according to any one of the preceding claims, **characterized in that** the spacer (10, 35) is impermeable for the casting material (18, 37, 44), and the casting material (18, 37, 44) is poured onto the spacer (10, 35).

5. Method according to any one of the preceding claims, **characterized in that** the surface (14) is an inside (23) of an open sheath (25) which is closed after all the hollow fibre membranes (5, 26) have been laid in.

6. Method according to Claim 5, **characterized in that** the sheath (25) consists of a shell (24) and a cover (31) which is separate from the shell (24), wherein the adhesive (13, 22) and the hollow fibre membranes (5, 26) are introduced into the shell (24) and the cover (31) then closes the sheath (25).

7. Method according to either of Claims 5 or 6, **characterized in that** the sheath (25) is bonded adhesively to the header (2, 32, 42) while the membrane block (3, 19, 41) is introduced into the header (2, 32, 42).

8. Method according to Claim 7, **characterized in that** the open ends (6, 33) protrude from the sheath (25) and protrude into the header (2, 32, 42), and that a connection point (38) between the header (2, 32, 42) and the sheath (25) is embedded by the casting material (18, 37, 44).

9. Method according to either of Claims 5 or 6, **characterized in that** a stabilising ring (40) is pushed onto the sheath (25) and bonded adhesively to the sheath (25).

10. Method according to Claim 9, **characterized in that** the stabilising ring (40) is bonded adhesively to the header (2, 32, 42) when the membrane block (3, 19, 41) is introduced into the header (2, 32, 42).

11. Method according to Claim 10, **characterized in that** the open ends (6, 33) protrude from the stabilising ring (40) and protrude into the header (2, 32, 42), and that a first connection point (46) between the header (2, 32, 42) and the stabilising ring (40) and a second connection point (47) between the stabilising ring (40) and the sheath (25) are embedded by the casting material (18, 37, 44).

12. Method according to any one of the preceding claims, **characterized in that** the hollow fibre membranes (5, 26) for laying in the adhesive (13, 22) are taken directly from a system (49) for membrane production.

## Revendications

1. Procédé de fabrication d'un filtre à membrane (1, 20, 39) pour filtrer un liquide,
- dans lequel le filtre à membrane (1, 20, 39) présente au moins un collecteur (2, 32, 42) et au moins un bloc de membrane (3, 19, 41) qui est relié au collecteur (2, 32, 42),
- dans lequel au moins un bloc de membrane (3, 19, 41) présente plusieurs rangées (4) des membranes en fibres creuses (5,26) juxtaposées essentiellement parallèlement unes aux autres,
- dans lequel chacune des membranes en fibres creuses (5,26) présente une extrémité ouverte (6, 33) qui se rattache à un espace de perméat (7, 45) dans au moins un collecteur (2, 32, 42) et à partir de l'espace de perméat (7,45) un filtrat peut être soutiré pendant le fonctionnement,
- dans lequel le au moins un bloc de membrane (3, 19, 41) présente un espaceur (10,35) à une distance (9, 34) des extrémités ouvertes (6, 33), qui espace les membranes à fibres creuses (5, 26) et les relie les unes aux autres, et
- dans lequel les membranes à fibres creuses (5, 26) entre l'espaceur (10, 35) et les extrémités ouvertes (6,33) sont entourées
- d'une couche d'étanchéité (11), qui fixe les membranes à fibres creuses (5, 26) dans le collecteur (2, 32, 42) et scelle de manière étanche l'espace de perméat (7, 45) contre le liquide,
et dans lequel le procédé comprend les étapes suivantes consistant à:
a) former au moins un bloc de membrane (3, 19, 41),
b) introduire au moins un bloc de membrane (3, 19, 41) dans le collecteur (2, 32, 42),
c) introduire un matériau de coulée liquide (18, 37, 44) entre l'espaceur (10, 35) et les extrémités ouvertes (6, 33) de telle sorte que le matériau de coulée (18, 37, 44) enveloppe les membranes en fibres creuses (5, 26) et
d) durcir le matériau de coulée (18, 37, 44) pour former la couche d'étanchéité (11),
**caractérisé en ce que** au moins un bloc de membrane (3, 19, 41) est formé par
e) application d'une première couche (12, 50) d'un adhésif (13, 22) sur une surface (14),
f) puis répétition des étapes suivantes jusqu'à ce que toutes les membranes à fibres creuses (5, 26) d'au moins un bloc de membrane (3, 19, 41) soient insérés:
i. insérer les membranes en fibres creuses (5, 26) de l'une des rangées (4) dans la couche préalablement appliquée (12, 50, 15, 16, 28, 53) de l'adhésif (13, 22), dans lequel les extrémités ouvertes (6, 33) sont positionnés à distance (9, 34) de la couche précédemment appliquée (12, 50, 15, 16, 28, 53) de l'adhésif (13, 22),
ii. appliquer une autre couche (15, 16, 17, 28, 30, 53) de l'adhésif (13, 22) sur la couche préalablement appliquée (12, 50,15, 16, 28, 53), de sorte que les membranes à fibres creuses insérées (5, 26) soient entourés tout autour par l'adhésif (13, 22),
g) et durcir l'adhésif (13, 22) pour former l'espaceur (10, 35).

2. Procédé selon la revendication 1, **caractérisé en ce que** les membranes en fibres creuses (5, 26) sont enfoncées après insertion dans l'adhésif (13, 22), de sorte qu'elles y soient au moins partiellement immergées.

3. Procédé selon la revendication 1 ou 2, **caractérisé en ce que** une autre couche (15, 16, 17, 28, 30, 53) de l'adhésif (13, 22) est appliquée tandis que l'adhésif (13, 22) de la couche précédemment appliquée (12, 50, 15, 16, 28, 53) est toujours collant et que l'adhésif (13, 22) ne durcit sur l'entretoise (10, 35) qu'après que toutes les membranes en fibres creuses (5, 26) ont été insérées.

4. Procédé selon une quelconque des revendications précédentes, **caractérisé en ce que** l'espaceur (10, 35) pour le matériau de coulée (18,37, 44) est imperméable et le matériau de moulage (18, 37, 44) est versé sur l'espaceur (10, 35).

5. Procédé selon une quelconque des revendications précédentes, **caractérisé en ce que** la surface (14) est un intérieur (23) d'une enveloppe ouverte (25), qui est fermée après l'insertion de toutes les membranes à fibres creuses (5, 26).

6. Procédé selon la revendication 5, **caractérisé en ce que** la gaine (25) est constituée d'une coque (24) et d'un capot (31) séparés de la coque (24), dans lequel l'adhésif (13, 22) et les membranes en fibres creuses (5, 26) sont introduites dans la coque (24) puis le couvercle (31) ferme l'enveloppe (25).

7. Procédé selon une quelconque des revendications 5 à 6, **caractérisé en ce que** la coque (25) lors de l'insertion du bloc de membrane (3, 19, 41) dans le collecteur (2, 32, 42) est collée au collecteur (2, 32, 42) .

8. Procédé selon la revendication 7, **caractérisé en ce que** les extrémités ouvertes (6,33) dépassent à partir du manchon (25) et font saillie dans le collecteur (2, 32, 42) et qu'un point de liaison(38) est incorporé entre le collecteur (2, 32, 42) et le manchon (25) par le matériau de moulage (18, 37, 44).

9. Procédé selon une quelconque des revendications 5 à 6, **caractérisé en ce qu'**un anneau de stabilisation (40) est poussé sur la coque (25) et est collé avec la coque (25).

10. Procédé selon la revendication 9, **caractérisé en ce que** l'anneau de stabilisation (40) lors de l'insertion du bloc de membrane (3, 19, 41) dans le collecteur (2, 32, 42) est collé au collecteur (2, 32, 42)

11. Procédé selon la revendication 10, **caractérisé en ce que** les extrémités ouvertes (6,33) dépassent en saillie de l'anneau de stabilisation (40) et dans le collecteur (2, 32, 42) et qu'un premier point de liaison (46) entre la tête (2, 32, 42) et la bague de stabilisation (40) et un deuxième point de liaison (47) entre la bague de stabilisation (40) et la coque (25) est incorporé dans le matériau de coulée (18, 37, 44).

12. Procédé selon une quelconque des revendications précédentes, **caractérisé en ce que** les membranes en fibres creuses (5, 26) à insérer dans l'adhésif (13, 22) sont directement prélevées sur un système (49) de production de membranes.
